# EUROPÄISCHE PATENTANMELDUNG

(11) **EP 1 936 407 A1**
(43) Veröffentlichungstag der Anmeldung: **25.06.2008**
(21) Anmeldenummer: 07023408.3
(22) Anmeldetag: 04.12.2007
(51) Int. Cl.: G02B 5/22

(54) **Strahlungsfilter**

(30) Priorität: 19.12.2006 DE 102006059955
(71) Anmelder: Diehl BGT Defence GmbH & Co.KG, 88662 Überlingen (DE)
(72) Erfinder: Meindl, Gerhard, 84066 Mallersdorf (DE); Rieger, Heinz-Josef, 53879 Euskirchen (DE)
(74) Vertreter: Diehl Patentabteilung

(57) **Zusammenfassung**

Es wird ein Strahlungsfilter (10) beschrieben, das zur Dämpfung der IR-Abstrahlung von einem Objekt, wie einem Fahrzeug oder einer stationären Einrichtung vorgesehen ist. Das Strahlungsfilter (10) weist eine elastische Grundschicht (12) und eine elastische Oberflächenschicht (20) auf, die durch Abstandselemente (18) voneinander beabstandet und miteinander verbunden sind. Durch die Abstandselemente (18) ist zwischen der Grundschicht (12) und der Oberflächenschicht (20) ein Hohlraum (22) gebildet.

## Beschreibung

Die Erfindung betrifft ein Strahlungsfilter gemäß dem Oberbegriff des Anspruches 1.

Ein solches Strahlungsfilter dient zur Dämpfung der IR-Abstrahlung von einem Objekt, wie einem Fahrzeug oder einer stationären Einrichtung, wie einem Gebäude, einem Mannschafts-Unterstand o. dgl. Bei dem Fahrzeug kann es sich um ein Militärfahrzeug, wie einen Mannschaftswagen, ein gepanzertes Fahrzeug o. dgl. handeln.

Fahrzeuge und stationäre Einrichtungen bzw. sonstige Objekte zeichnen sich durch ihre gesamte und/oder baugruppenspezifische Wärmeabstrahlung von einem Hintergrund deutlich ab und sind folglich mit Wärmesuchköpfen leicht aufzufassen.

Um eine derartige Abzeichnung der Wärmeabstrahlung vom umgebenden Hintergrund und die Auffassung mit Wärmesuchköpfen entsprechend zu reduzieren, sind IR-Strahlungsfilter d.h. IR-Dämpfungselemente in halbharter und in harter Ausbildung bekannt, die am jeweiligen Objekt, d.h. am jeweiligen Fahrzeug oder an der jeweiligen stationären Einrichtung, angebracht werden. Diese bekannten Dämpfungselemente sind nicht elastisch, so dass sie an dem jeweiligen, seine IR-Abstrahlung dämpfenden Objekt nicht optimal an dessen Außenkonturen angepasst werden können. Außerdem besitzen diese bekannten halbharten oder harten Dämpfungselemente eine zumindest teilweise offenporige Oberfläche, so dass sie nicht dauerhaft truppentauglich sind.

In Kenntnis dieser Gegebenheiten liegt der Erfindung die Aufgabe zugrunde, ein Strahlungsfilter zur Dämpfung der IR-Abstrahlung vom jeweiligen, eine IR-Strahlung erzeugenden Objekt, zu schaffen, mit welchem gute Dämpfungseigenschaften erreicht werden und das an die Kontur des Objektes einfach anpassbar ist.

Diese Aufgabe wird erfindungsgemäß durch die Merkmale des Anspruches 1 gelöst. Bevorzugte Aus- bzw. Weiterbildungen des erfindungsgemäßen Strahlungsfilters sind in den Unteransprüchen gekennzeichnet.

Besonders vorteilhaft ist es bei dem erfindungsgemäßen Strahlungsfilter, dieses an seiner Oberflächenschicht mit einer geschlossenporigen, strukturierten Außenoberfläche auszubilden. Dabei kann die strukturierte Außenoberfläche als allseits gerundete Noppenoberfläche ausgebildet sein, wobei die Noppen unterschiedliche Abmessungen - sowohl im Querschnitt als auch in der Höhe - aufweisen und unregelmäßig verteilt vorgesehen sind. Eine derartige Ausbildung weist den Vorteil auf, dass die Abzeichnung des mit einem erfindungsgemäßen Strahlungsfilter versehenen Objektes in Bezug zur Umgebung, d.h. in Bezug zum Hintergrund des Objektes, nur noch eine relativ kleine Temperaturdifferenz besitzt, die bspw. 5°C oder weniger beträgt.

Durch die Ausbildung des erfindungsgemäßen Strahlungsfilters mit einer Oberflächenschicht aus einem dauerelastischen Material bzw. einem getriebenen, geschäumten dauerelastischen Material mit einer geschlossenporigen Außenoberfläche ergibt sich ein Strahlungsfilter mit einer strapazierfähigen Oberfläche, wie sie bspw. für militärische Anwendungen erforderlich ist.

Zweckmäßig kann es sein, wenn die Außenoberfläche des erfindungsgemäßen Strahlungsfilters zur optischen Tarnung gefärbt ist, so dass sich durch optische Flächenzerreißung eine entsprechende Tarnwirkung ergibt. Besonders vorteilhaft ist die Tarnwirkung durch eine Flächenzerreißung in der IR-Abbildung des mit dem erfindungsgemäßen Strahlungsfilter versehenen Objektes.

Dadurch, dass die Grundschicht und die mit dieser durch die Abstandselemente voneinander beabstandete und mit ihr verbundene Oberflächenschicht aus elastischen Materialien bestehen, ist in vorteilhafter Weise eine problemlose Anpassung des Strahlungsfilters an die Kontur des jeweiligen Objektes, bei dem es sich um ein Fahrzeug oder eine stationäre Einrichtung handeln kann, möglich.

Durch die Ausbildung des erfindungsgemäßen Strahlungsfilters mit einer geschlossenporigen Außenoberfläche bspw. mit unterschiedlich großen und unregelmäßig verteilten Noppen aus einem getriebenen dauerelastischen Material in der jeweils gewünschten Hintergrundfarbe werden also - wie bereits erwähnt worden ist - in vorteilhafter Weise sowohl optische Tarneffekte als auch die gewünschten thermischen Dämpfungseffekte erzielt und miteinander kombiniert. Die thermische Dämpfung wird durch den Hohlraum zwischen der elastischen Grundschicht und der elastischen Oberflächenschicht, d.h. durch die im besagten Hohlraum befindliche Luftschicht, unter der getriebenen Oberflächenschicht in vorteilhafter Weise verstärkt. Die Luftschicht ist durch die von der Grundschicht materialeinstückig wegstehenden dauerelastischen Abstandshalter bestimmt. Erfindungsgemäße Strahlungsfilter sind dauerhaft elastisch, begehbar, strapazierfähig und im Bedarfsfall dekontaminierbar.

Ein Ausführungsbeispiel des erfindungsgemäßen Strahlungsfilters ist in der Zeichnung schematisch, d.h. nicht maßstabsgetreu verdeutlicht, und wird nachfolgend beschrieben.

Es zeigen:
- Fig.1: in einer Schnittdarstellung einen Abschnitt einer Ausbildung des Strahlungsfilters,
- Fig. 2: einen Abschnitt des Strahlungsfilters gemäß Fig.1 in Blickrichtung des Pfeiles II,
- Fig. 3: einen Schnitt entlang der Schnittlinie III-III in Fig.1 durch das Strahlungsfilter,
- Fig. 4: abschnittweise in einer Längsschnittdarstellung - ähnlich der Fig.1 - eine andere Ausbildung des Strahlungsfilters, und
- Fig. 5: einen Schnitt entlang der Schnittlinie V-V in Fig.4.

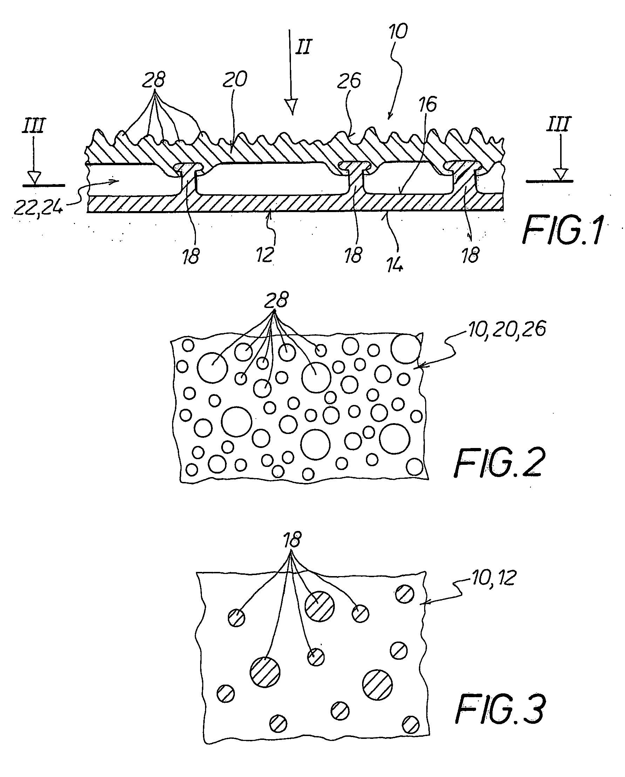

Fig.1 verdeutlicht abschnittweise in einer Schnittdarstellung eine Ausbildung des Strahlungsfilters 10, das zur Dämpfung der IR-Abstrahlung von einem Objekt, wie einem Fahrzeug oder einer stationären Einrichtung, vorgesehen ist. Das Strahlungsfilter 10 weist eine elastische Grundschicht 12 auf, mit der es an dem die IR-Strahlung emittierenden und zu dämpfenden Objekt mit seiner Grundfläche 14 anliegt.

Von der der Grundfläche 14 gegenüberliegenden Oberfläche 16 der Grundschicht 12 stehen materialeinstückig Abstandselemente 18 weg. Wie aus Fig.3 ersichtlich ist, besitzen die Abstandselemente 18 unterschiedliche Querschnittsabmessungen und sind an der Grundschicht 12 unregelmäßig verteilt vorgesehen.

Durch die Abstandselemente 18 ist von der Grundschicht 12 eine elastische Oberflächenschicht 20 beabstandet und mit der Grundschicht 12 verbunden. Durch die Abstandselemente 18 ist zwischen der elastischen Grundschicht 12 und der elastischen Oberflächenschicht 20 ein Hohlraum 22 bestimmt. Der Hohlraum 22 bildet eine Luftschicht 24.

Die Abstandselemente 18 können jede beliebige Querschnittsform besitzen, d.h. sie können einen kreisrunden, ovalen, mehreckigen oder beliebig anders geformten Querschnitt besitzen.

Die elastische Oberflächenschicht 20 besteht vorzugsweise aus einem dauerelastischen Material, bei dem es sich zweckmäßigerweise um ein getriebenes, geschäumtes dauerelastisches Material handelt. Die Oberflächenschicht 20 besitzt eine geschlossenporige Außenoberfläche 26. Die Außenoberfläche 26 ist trittfest, sie kann zur optischen Tarnung gefärbt sein.

Die Oberflächenschicht 20 ist mit einer strukturierten Außenoberfläche 26 ausgebildet. Die Strukturierung kann als allseitig gerundete Noppenoberfläche ausgebildet sein, wie die Fig.1 schematisch verdeutlicht.

Die Noppen 28 der strukturierten d.h. genoppten Außenoberfläche 26 weisen unterschiedliche Abmessungen auf und sind unregelmäßig verteilt vorgesehen, wie die Figuren 1 und 2 zeigen.

Die Grundschicht 12 besteht vorzugsweise wie die Oberflächenschicht 20 aus einem dauerelastischen Material. Die Oberfläche 16 der Grundschicht 12 kann ebenflächig glatt oder strukturiert sein.

Die Oberflächenschicht 20 ist mit den von der Grundschicht 12 wegstehenden Abstandselementen 18 fest verbunden. Bei dieser Verbindung kann es sich um eine materialschlüssige Verbindung wie bspw. eine Verschweißung, Verklebung oder Vernähung handeln. Eine andere Möglichkeit besteht darin, dass die Grundschicht 12 mit der Oberflächenschicht 20 an den Abstandselementen 18 formschlüssig verbunden ist. Eine solche formschlüssige Verbindung ist in Fig.1 als Druckknopf-Verbindung verdeutlicht.

Bei den für das erfindungsgemäße Strahlungsfilter zur Anwendung gelangenden Materialien handelt es sich z.B. um geschäumten, getriebenen Zellkautschuk oder Moosgummi o. dgl. Die Gesamtdicke d.h. Bauhöhe des Strahlungsfilters beträgt bspw. 4 bis 5 mm ohne selbstverständlich hierauf beschränkt zu sein. Die Spaltweite des Hohlraumes 22 beträgt bspw. 3 mm. Selbstverständlich ist auch eine andere Dimensionierung möglich. Die Wellenhöhe der Noppen 28 beträgt bspw. 1 bis 2 mm. Die Noppen 28 liegen z.B. in drei unterschiedlichen Durchmessern und Höhen vor.

Die Grundschicht 12 und die Oberflächenschicht 20 besitzen wahllos verteilte, mit Luft gefüllte Poren.

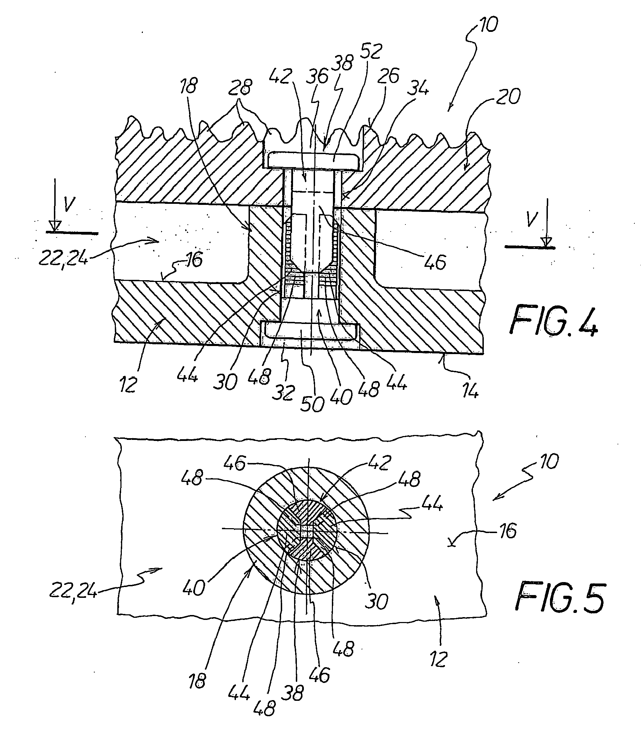

Fig.4 zeigt in einer Schnittdarstellung einen Abschnitt des Strahlungsfilters 10 mit einer Grundschicht 12 und einer Oberflächenschicht 20. Von der Grundschicht 12 stehen materialeinstückig Abstandselemente 18 weg, von welchen in Fig.4 nur ein Abstandselement 18 gezeichnet ist. Durch das Abstandselement 18 und die Grundschicht 12 erstreckt sich mittig ein Durchgangsloch 30 hindurch, das von der Grundfläche 14 der Grundschicht 12 ausgehend mit einer Einsenkung 32 ausgebildet ist. Die Oberflächenschicht 20 ist ebenfalls mit einem Durchgangsloch 34 ausgebildet, das mit dem Durchgangsloch 30 der Grundschicht 12 axial fluchtet. Das Durchgangsloch 34 ist - wie das Durchgangsloch 30 - mit einer Einsenkung 36 ausgebildet.

Bei dieser Ausführungsform des Strahlungsfilters 10 sind die Grundschicht 12 und die Oberflächenschicht 20 miteinander mittels Kunststoff-Rastnieten 38 fest verbunden. Die jeweilige Rastniete 38 besteht aus zwei Nietenteilen 40 und 42. Jedes Nietenteil 40, 42 weist zwei sich gegenüberliegende Nietenschenkel 44, 46 (siehe auch Fig.5) auf. Die Nietenschenkel 44, 46 sind jeweils mit gezahnten Schenkelflächen 48 ausgebildet, die im zusammengebauten Zustand der Kunststoff-Rastniete 38 ineinander greifen und eine feste Verbindung der Nietenteile 40 und 42 bewirken.

Das jeweilige Nietenteil 40, 42 ist mit einem Nietenkopf 50, 52 ausgebildet, von dem die zugehörigen Nietenschenkel 44, 46 wegstehen.

Die Einsenkung 42 in der Grundschicht 12 dient zur Aufnahme des Nietenkopfes 50 des Nietenteiles 40 und die von der Außenoberfläche 26 der Oberflächenschicht 20 ausgehende Einsenkung 36 in der Oberflächenschicht 20 dient zur Aufnahme des Nietenkopfes 52 des Nietenteiles 42.

Gleiche Einzelheiten sind in den Figuren 4 und 5 mit denselben Bezugsziffern wie in den Figuren 1 bis 3 bezeichnet, so dass es sich erübrigt, in Verbindung mit den Figuren 4 und 5 alle Einzelheiten noch einmal detailliert zu beschreiben.

### Bezugsziffernliste:

- 10: Strahlungsfilter
- 12: Grundschicht (von 10)
- 14: Grundfläche (von 12)
- 16: Oberfläche (von 12)
- 18: Abstandselemente (von 12 an 16)
- 20: Oberflächenschicht (von 10)
- 22: Hohlraum (zwischen 12 und 20)
- 24: Luftschicht (in 22)
- 26: Außenoberfläche (von 20)
- 28: Noppen (von 26)
- 30: Durchgangsloch (in 18 und 12)
- 32: Einsenkung (von 30 in 12)
- 34: Durchgangsloch (in 20)
- 36: Einsenkung (von 34 in 20)
- 38: Kunststoff-Rastnieten (von 10 für 12 und 20)
- 40: Nietenteil (von 38 bei 12)
- 42: Nietenteil (von 38 bei 20)
- 44: Nietenschenkel (von 40)
- 46: Nietenschenkel (von 42)
- 48: gezahnte Schenkelflächen (von 44, 46)
- 50: Nietenkopf (von 40)
- 52: Nietenkopf (von 42)

## Patentansprüche

1. Strahlungsfilter zur Dämpfung der IR-Abstrahlung von einem Objekt, wie einem Fahrzeug oder einer stationären Einrichtung,
**dadurch gekennzeichnet,**
**dass** eine elastische Grundschicht (12) und eine elastische Oberflächenschicht (20) vorgesehen sind, die durch Abstandselemente (18) voneinander beabstandet und mit einander verbunden sind, und durch die zwischen der Grundschicht (12) und der Oberflächenschicht (20) ein Hohlraum (22) gebildet ist.

2. Strahlungsfilter nach Anspruch 1,
**dadurch gekennzeichnet,**
**dass** die Oberflächenschicht (20) aus einem dauerelastischen Material besteht.

3. Strahlungsfilter nach Anspruch 2,
**dadurch gekennzeichnet,**
**dass** die Oberflächenschicht (20) aus einem getriebenen, geschäumten dauerelastischen Material besteht.

4. Strahlungsfilter nach Anspruch 3,
**dadurch gekennzeichnet,**
**dass** die Oberflächenschicht (20) eine geschlossenporige Außenoberfläche (26) aufweist.

5. Strahlungsfilter nach einem der Ansprüche 1 bis 4,
**dadurch gekennzeichnet,**
**dass** die Oberflächenschicht (20) eine strukturierte Außenoberfläche (26) aufweist.

6. Strahlungsfilter nach Anspruch 5,
**dadurch gekennzeichnet,**
**dass** die Außenoberfläche (26) trittfest ist.

7. Strahlungsfilter nach Anspruch 5,
**dadurch gekennzeichnet,**
**dass** die Außenoberfläche (26) zur optischen Tarnung gefärbt ist.

8. Strahlungsfilter nach Anspruch 5,
**dadurch gekennzeichnet,**
**dass** die strukturierte Außenoberfläche (26) mit allseits gerundeten Noppen (28) ausgebildet ist.

9. Strahlungsfilter nach Anspruch 8,
**dadurch gekennzeichnet,**
**dass** die Noppen (28) unterschiedliche Abmessungen besitzen und unregelmäßig verteilt sind.

10. Strahlungsfilter nach Anspruch 1,
**dadurch gekennzeichnet,**
**dass** die Grundschicht (12) aus einem dauerelastischen Material besteht.

11. Strahlungsfilter nach einem der Ansprüche 1 bis 10,
**dadurch gekennzeichnet,**
**dass** die Abstandselemente (18) von der Oberfläche (16) der Grundschicht (12) materialeinstückig wegstehen.

12. Strahlungsfilter nach einem der Ansprüche 1 bis 11,
**dadurch gekennzeichnet,**
**dass** die Abstandselemente (18) unterschiedliche Querschnittsabmessungen aufweisen.

13. Strahlungsfilter nach einem der Ansprüche 1 bis 12,
**dadurch gekennzeichnet,**
**dass** die Abstandselemente (18) unregelmäßig verteilt vorgesehen sind.

14. Strahlungsfilter nach Anspruch 11,
**dadurch gekennzeichnet,**
**dass** die Oberfläche (16) der Grundschicht (12) ebenflächig glatt ist.

15. Strahlungsfilter nach Anspruch 11,
**dadurch gekennzeichnet,**
**dass** die Oberfläche (16) der Grundschicht (12) strukturiert ist.

16. Strahlungsfilter nach einem der Ansprüche 11 bis 15,
**dadurch gekennzeichnet,**
**dass** die Oberflächenschicht (20) mit den von der Grundschicht (12) wegstehenden Abstandselementen (18) materialschlüssig verbunden ist.

17. Strahlungsfilter nach Anspruch 16,
**dadurch gekennzeichnet,**
**dass** die materialschlüssige Verbindung von einer Klebung, einer Schweißung oder einer Vernähung gebildet ist.

18. Strahlungsfilter nach einem der Ansprüche 11 bis 15,
**dadurch gekennzeichnet,**
**dass** die Oberflächenschicht (20) mit den von der Grundschicht (12) wegstehenden Abstandselementen (18) formschlüssig verbunden ist.

19. Strahlungsfilter nach Anspruch 18,
**dadurch gekennzeichnet,**
**dass** die formschlüssige Verbindung von einer Klett-Gegenklett-Verbindung oder von einer Druckknopf-Verbindung gebildet ist.

20. Strahlungsfilter nach Anspruch 18,
**dadurch gekennzeichnet,**
**dass** die Verbindung der Oberflächenschicht (20) mit der Grundschicht (12) von Kunststoff-Rastnieten (38) gebildet ist.

21. Strahlungsfilter nach Anspruch 20,
**dadurch gekennzeichnet,**
**dass** sich die Kunststoff-Rastnieten (38) durch die Abstandselemente (18) erstrecken.
